# EUROPÄISCHE PATENTSCHRIFT

(11) **EP 3 083 809 B1**
(45) Veröffentlichungstag und Bekanntmachung des Hinweises auf die Patenterteilung: **12.09.2018**
(21) Anmeldenummer: 14815678.9
(22) Anmeldetag: 17.12.2014
(51) Int. Cl.: C08L 9/00, A61K 33/30, C08L 15/00

(54) **HITZEHÄRTBARE KAUTSCHUK-ZUSAMMENSETZUNGEN MIT PLASTISOLARTIGEM FLIESSVERHALTEN**
HEAT CURABLE RUBBER COMPOSITIONS WITH PLASTISOL-LIKE RHEOLOGY
COMPOSITIONS DE CAOUTCHOUC THERMODURCISSABLES PRÉSENTANT UNE FLUIDITÉ DE TYPE PLASTISOL

(30) Priorität: 18.12.2013 DE 102013226505
(43) Veröffentlichungstag der Anmeldung: 26.10.2016
(73) Patentinhaber: Henkel AG & Co. KGaA, 40589 Düsseldorf (DE)
(72) Erfinder: SAUER, Ralf, 68789 St. Leon-Rot (DE); BORN, Peter, 69207 Sandhausen (DE); WEIDENAUER, Karin, 69124 Heidelberg (DE)
(86) Internationale Anmeldenummer: PCT/EP2014/078162
(87) Internationale Veröffentlichungsnummer: WO 2015/091611

(56) Entgegenhaltungen:
- DE-A1-102006 016 577
- DE-A1-102009 026 824
- DE-A1-102009 028 607
- US-A1- 2011 233 479

## Beschreibung

Die Erfindung betrifft hitzehärtbare Zusammensetzungen auf der Basis von flüssigen Kautschuken, die ein plastisol-artiges Fließverhalten haben, deren Verwendung im Automobillackbereich sowie ein Verfahren zur Beschichtung, Versiegelung, Abdichten oder Verklebung von Bauteilen im Fahrzeugpaintshop

Das Beschichten bzw. das Abdichten von Blechteilen im Fahrzeugbau, insbesondere bei Karosserien von Automobilen, wird häufig an KTL (kathodischen Tauchlacken) - beschichteten Blechteilen vorgenommen. Die Aushärtung der hierbei eingesetzten Nahtversiegelungs und Beschichtungsmassen erfolgt später in den Lacktrockenöfen. Vorher durchlaufen die verklebten bzw. abgedichteten Teile Reinigungs-, Phosphatier- und Tauchgrundierungsstufen. Durch die in diesen Stufen verwendeten Behandlungsmittel können die Kleb- bzw. Dichtmittel aus den Klebefugen gespült werden. Um diesen Anforderungen gerecht zu werden, sind verschiedene Vorgehensweisen bekannt geworden, z.B. eine thermisch/induktive Vorhärtung von niedrigviskosen, pastösen Kleb-/Dichtstoffen, die Verwendung von Klebstoffen in Form von lösungsmittelhaltigen Zusammensetzungen oder Hotmelts, als 2-Komponenten Produkte oder auch als Formteile, die in der Regel manuell appliziert werden und zum Zeitpunkt der Applikation eine Eigenklebrigkeit besitzen. Diese Formteile können dabei in Band- oder Rundschnurform oder als Stanzteile oder als Profile beliebigen Querschnitts vorliegen.

Niedrigviskose, pastöse Beschichtungsmassen lassen sich besonders einfach durch Spritz- bzw. Sprühapplikationen oder Flatstreamapplikationen oder auch Extrusionen einsetzen, daher finden derartige Produkte insbesondere auf der Basis von Plastisolen auch im Automobillackbereich sehr häufig Einsatz.

Unter Plastisolen werden allgemein Dispersionen von organischen Kunststoffen in Weichmachern verstanden, welche beim Erwärmen auf höhere Temperatur gelieren und beim Abkühlen aushärten. Die in der Praxis heute noch gebräuchlichen Plastisole enthalten ganz überwiegend feinpulvriges Polyvinylchlorid (PVC), welches in einem flüssigen Weichmacher dispergiert ist und eine Paste bildet. Derartige Polyvinylchloridplastisole finden für die verschiedensten Zwecke Anwendung. Sie werden u.a. als Dichtungsmassen, z.B. für Nahtabdichtungen bei Metallbehältern oder als Bördelnahtkleber in der Metallindustrie, als Korrosionsschutzüberzüge für Metalle (beispielsweise als Unterbodenschutz für Kraftfahrzeuge), zum Imprägnieren und Beschichten von Substraten aus textilen Materialien (z.B. als Teppichrückseitenbeschichtung), als Kabelisolierungen usw. eingesetzt). Es sind auch Plastisole auf der Basis von feinpulvrigen Methacrylatcopolymeren (PMMA) oder Styrolcopolymeren bekannt geworden. Derartige Plastisole, insbesondere auf Basis von PVC oder PMMA werden auch im Automobilbau in großem Umfang eingesetzt. Zur Unterfütterung von versteifenden Strukturen wie Motorhauben, Kofferraumdeckeln, Türen, Dachkonstruktionen sowie zur Bördelnahtverklebung und zur Versiegelung von Nähten aus anderweitigen Fügungsverfahren. Vorteilhaft bei der Verwendung von Plastisolen für diese Anwendungszwecke sind deren günstiges Fließverhalten, insbesondere bei Raumtemperatur. Um die Wäscherbeständigkeit in den diversen Reinigungs-, Phosphatier- und Tauchgrundierungsstufen bei der Fertigung der Automobilkarossen zu gewährleisten, werden diese Plastisol-Zusammensetzungen häufig in einem Vorgelierungsprozess soweit angeliert, dass ihre Viskosität hoch genug ist, um diese Wäscherbeständigkeit und eine Anfangsfestigkeit der Bauteile zu gewährleisten.

Neben den vorgenannten Vorteilen haben Plastisol-Zusammensetzungen allerdings eine Reihe von gravierenden Nachteilen, so zeigt ihre Alterungsbeständigkeit große Schwächen, so dass sich durch Korrosion und, damit verbunden, Haftungsverluste Qualitätseinbußen ergeben. Insbesondere hat sich gezeigt, dass die im Rohbau verwendeten Plastisole zur Feuchtigkeitsaufnahme neigen können. Bei Bauteilen, die lediglich vorgeliert wurden und dann entweder längere Zeit zwischengelagert werden müssen oder an entfernte Produktionsstandorte transportiert werden müssen ist letzteres besonders gravierend. Weiterhin zeigen sie gewisse Schwächen in der Alterungsbeständigkeit nach VDA-Wechseltest und Salzsprühtest gemäß DIN 50021. Auch die Lagerstabilität derartiger Plastisol-Zusammensetzungen ist verbesserungsbedürftig, da sie gelegentlich zum Separieren der dispersen und der flüssigen Phase neigen. Fernerhin tendieren sie zum "Stocken" d.h. bei längerer Lagerung wird, vermutlich durch Agglomerationsprozesse, das Material so hochviskos, dass es vor der Applikation zunächst einer hohen Scherung unterworfen werden muss, um es wieder in den niederviskosen, spritzbaren Zustand zu überführen. Außerdem sind die Plastisol-Zusammensetzungen bezüglich ihrer maximalen Lagertemperatur sehr empfindlich, sie müssen auf jeden Fall unterhalb von 40 °C gelagert werden, weil sonst bereits eine teilweise Angelierung des Plastisols erfolgt. Darüber hinaus haben auch ausgehärtete Plastisole thermoplastischen Charakter d.h. ihre Festigkeit bei höheren Temperaturen ist stark eingeschränkt, so dass sie für strukturelle Verklebungen nicht einsetzbar sind.

Ein weiterer gravierender Nachteil, der mehr und mehr in den Fokus rückt, ist die Tatsache, dass die üblicherweise verwendeten Plastisole auf Weichmachern basieren, die nicht mit der Polymermatrix vernetzt werden und daher über einen längeren Zeitraum aus den Zusammensetzungen austreten. Diese Weichmacher-Emissionen sind unter verschiedenen Gesichtspunkten nicht vorteilhaft. Es wäre daher wünschenswert alternative Zusammensetzungen zur Verfügung zu haben, die die günstigen Eigenschaften von Plastisol-Zusammensetzungen aufweisen, d.h. insbesondere eine ausreichend niedrige Viskosität um eine Sprühbarkeit bei Raumtemperatur zu gewährleisten sowie eine hohe Elastizität im ausgehärteten Zustand.

DE 10 2009 028 607 beschreibt heiß härtende reaktive Zusammensetzungen, die neben einem Vulkanisationssystem 9 bis 15 Gew.-% eines flüssigen Polyisoprens und 16 bis 29 Gew.-% eines flüssigen Polybutadiens enthalten. DE 10 2009 026 824 A1 beschreibt thermisch härtbare Zusammensetzungen, die neben einem Vulkanisationssystem ein olefinische Doppelbindungen enthaltendes Polymer enthalten und die sich besonders gut zur akustischen Dämpfung eignen

Als alternative Klebstoffe oder Dichtungs- und Versiegelungsmassen wurden daher in jüngerer Zeit verstärkt Zusammensetzungen auf der Basis von vulkanisierbaren Kautschukmischungen vorgeschlagen (EP 0 097 394 B1, DE 3834818 C, EP 0 441 244 B1, EP 0 309 903 B1, WO 96/23040, WO99/03946, WO 02/48255 A2).

Die Kautschuk-Zusammensetzungen des vorgenannten Standes der Technik eigenen sich zwar generell sehr gut für ihren Einsatz im Rohbau bei der Automobilfertigung, sie weisen auch hervorragende Eigenschaft bezüglich der Wäscherbeständigkeit, ihrer Alterungsbeständigkeit und der geforderten technischen Eigenschaften auf. Ein wesentlicher Nachteil dieser Kautschukmassen ist jedoch ihre sehr hohe Viskosität, so dass diese in aller Regel nur warm verpumpbar appliziert werden können. Sie können nicht mit herkömmlichen Spritzverfahren, wie z.B. den Airless-Verfahren aufgetragen werden. Ein weiterer Nachteil sind die höheren Kosten derartiger Formulierungen. Schließlich ist in jüngster Zeit stetig das Bedürfnis gewachsen, auch derartige Versiegelungs - und Beschichtungsmassen auf Basis von natürlichen und/oder nachwachsenden Rohstoffen zu formulieren.

Dementsprechend war es die Aufgabe der vorliegenden Erfindung, hitzehärtbare Zusammensetzungen zu entwickeln, die hinsichtlich ihrer Applizierbarkeit und ihrer mechanischen Eigenschaften mit Plastisol-Zusammensetzungen bzw. bekannten Zusammensetzungen auf Basis von Flüssigkautschuken vergleichbar sind, aber die bekannten Nachteile überwinden. Insbesondere bestand die Aufgabe darin Zusammensetzungen bereitzustellen, die die Viskosität und damit die Verarbeitbarkeit von herkömmlichen Plastisol-Zusammensetzungen aufweisen, dabei aber frei von Weichmachern und Lösungsmittel sind, und die verglichen mit bekannten Kautschuk-Zusammensetzungen kostengünstiger sind, einen höheren Anteil an natürlichen und/oder nachwachsenden Rohstoffen und niedrigere Viskositäten aufweisen. Ferner sollten die Zusammensetzungen mechanische Eigenschaften aufweisen, die mit den zurzeit verwendeten Zusammensetzungen vergleichbar sind.

Überraschenderweise wurde gefunden, dass sich die gewünschten Eigenschaften durch eine hitzehärtbare Zusammensetzung auf der Basis von pflanzlichen Ölen, natürlichen und/oder synthetischen olefinische Doppelbindungen enthaltenden flüssigen Elastomeren und Vulkanisationsmitteln erzielen lassen. Diese Systeme zeichnen sich durch eine gute Applizierbarkeit und hervorragende mechanische Eigenschaften im ausgehärteten Zustand aus. Bei der Heißvernetzung (Vulkanisation) entstehen aus den erfindungsgemäßen Systemen kautschukartige klebfreie Elastomerstrukturen.

Ein erster Gegenstand der vorliegenden Erfindung sind dementsprechend hitzehärtbare reaktive Zusammensetzungen, die
(a) mindestens ein flüssiges Polyisopren, vorzugsweise mindestens ein cis-1,4-Polyisopren, in einer Menge von 1 bis 25 Gew.-%, vorzugsweise 1 bis 15 Gew.-%, insbesondere 3 bis 10 Gew.-% bezogen auf die Gesamtzusammensetzung;
(b) mindestens ein funktionalisiertes, flüssiges Polybutadien in einer Menge von 0,1 bis 10 Gew.-%, vorzugsweise 0,5 bis 10 Gew.-%, bevorzugt 0,5 bis 5 Gew.-%, insbesondere 0,5 bis 3 Gew.-% bezogen auf die Gesamtzusammensetzung;
(c) eine Triglyceridfraktion, deren Fettsäurenverteilung einen Anteil von mindestens 5 Gew.-%, insbesondere von mindestens 60 Gew.-%, einer oder mehrerer Omega-3-Fettsäure(n) und/oder einer oder mehrerer Omega-6-Fettsäure(n) aufweist, in einer Menge von 1 bis 40 Gew.-%, vorzugsweise 1 bis 25 Gew.-%, insbesondere 5 bis 25 Gew.-%bezogen auf die Gesamtzusammensetzung; und
(d) mindestens ein Vulkanisationsmittel;
enthalten, wobei der Anteil an synthetischen Polymeren, welche mindestens eine C=C-Doppelbindung und/oder mindestens eine CΞC-Dreifachbindung aufweisen, mindestens 7,5 Gew.-%, vorzugsweise 9 Gew.-%, bezogen auf die Gesamtzusammensetzung beträgt.

Ein weiterer Gegenstand der vorliegenden Erfindung ist die Verwendung dieser hitzehärtenden, reaktiven Zusammensetzungen als Dichtstoff, Versiegelungsmasse oder Beschichtungsmasse, insbesondere im Automobilpaintshop.

Ein weiterer Gegenstand der vorliegenden Erfindung betrifft ein Verfahren, insbesondere im Fahrzeugpaintshop, zum Verbinden von Bauteilen und/oder Abdichten von Fugen zwischen Bauteilen, insbesondere zur Versiegelung von Grob- und/oder Feinnähten oder Beschichten des Unterboden, dass die folgenden wesentlichen Verfahrensschritte beinhaltet:
a) Applizieren der vorgenannten Zusammensetzung auf mindestens ein Bauteil, insbesondere durch Sprühen oder Extrudieren;
b) Zusammenfügen der Bauteile, gegebenenfalls gefolgt vom (Punkt-)schweißen, Bördeln, Schrauben und/oder Nieten,
c) Erhitzen der Bauteile zum Aushärten der Zusammensetzung, gegebenenfalls unter mechanischer Fixierung der Bauteile.

Noch ein weiterer Gegenstand der Erfindung ist ein Verfahren zum Beschichten von Bauteilen, wobei das Verfahren beinhaltet:
a) Aufsprühen einer erfindungsgemäßen Zusammensetzung auf die Oberfläche des Bauteils; und
b) Erhitzen des beschichteten Bauteils zum Aushärten der Zusammensetzung.

Der Begriff "flüssig", wie hierin verwendet, bezieht sich auf den Aggregatzustand bei Raumtemperatur, d.h. bei 20 °C, und ist so zu verstehen, dass das Produkt unter dem Einfluss der Schwerkraft aus einem Behälter ausgegossen werden kann.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein flüssiges Polyisopren" bedeutet somit beispielsweise mindestens eine Art von flüssigem Polyisopren, d.h. dass eine Art von flüssigem Polyisopren oder eine Mischung mehrerer verschiedener flüssiger Polyisoprene verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Zusammensetzung.

Sofern in der vorliegenden Anmeldung auf Molekulargewichte Bezug genommen wird, beziehen sich die Angaben, sofern nicht anders angegeben, auf das Gewichtsmittel, d.h. den M_{w}-Wert. Das Molekulargewicht lässt sich mittels GPC bestimmen, wobei gegen einen Polystyrol-Standard geeicht wird.

Die erfindungsgemäßen Zusammensetzungen sind vorzugsweise frei von Festkautschuken d.h. von Kautschuken mit einem Molekulargewicht von 100000 oder höher. Es ist ferner bevorzugt, dass die Zusammensetzungen der Erfindung flüssig sind.

In verschiedenen Ausführungsformen der Erfindung, umfasst das mindestens eine flüssige Polyisopren ein oder mehrere flüssige cis-1,4-Polyisopren(e) mit einem Molekulargewicht zwischen 10000 und 70000, vorzugsweise zwischen 15000 und 50000, insbesondere 20000 und 50000. Diese flüssigen Polyisoprene bringen die notwendige Elastizität und hohe Festigkeit der ausgehärteten Kautschuk-Zusammensetzungen.

Die Zusammensetzungen enthalten weiterhin mindestens ein funktionalisiertes, flüssiges Polybutadien, insbesondere 1,4- und/oder 1,2-Polybutadien, wobei diese Polymere endständige und/oder (statistisch verteilte) seitenständige funktionelle Gruppen haben. Beispiele für derartige funktionelle Gruppen sind Hydroxy-, Amino-, Carboxyl-, Carbonsäureanhydrid- oder Epoxygruppen, insbesondere Carboxygruppen. Das Molekulargewicht dieser Flüssigkautschuke ist typischerweise unterhalb von 20000, vorzugsweise zwischen 900 und 10000.

Es hat sich als zweckmäßig erwiesen, vorzugsweise Mischungen von Flüssigkautschuken unterschiedlicher Molekulargewichte und unterschiedlicher Konfiguration in Bezug auf die restlichen Doppelbindungen einzusetzen. Zur Erzielung optimaler Haftung auf den diversen Substraten wird in den besonders bevorzugten Formulierungen anteilig eine Flüssigkautschukkomponente mit Hydroxylgruppen bzw. Carboxylgruppen eingesetzt.

Der Anteil an synthetischen Polymeren, welche mindestens eine C=C-Doppelbindung und/oder mindestens eine CΞC-Dreifachbindung aufweisen, in der Zusammensetzung beträgt mindestens 7,5 Gew.-%, vorzugsweise 9 Gew.-% bezogen auf die Gesamtzusammensetzung. Unter den hier genannten synthetischen Polymeren werden alle synthetisch hergestellten Polymere verstanden, die mindestens eine C=C-Doppelbindung und/oder mindestens eine CΞC-Dreifachbindung aufweisen. Beispiele solcher synthetischen Polymere sind der folgenden Gruppe der Homo- und/oder Copolymeren zu entnehmen:
- Polybutadiene, insbesondere die 1,4- und 1,2-Polybutadiene,
- Polybutene,
- Polyisobutylene,
- Styrol-Butadien-Copolymere und
- Butadienacrylnitril-Copolymere.

Die erfindungsgemäßen hitzehärtbaren Zusammensetzungen enthalten mindestens eine Triglyceridfraktion, deren Fettsäurenverteilung einen Anteil von mindestens 5 Gew.-%, insbesondere von mindestens 10 Gew.-%, ganz besonders bevorzugt von mindestens 60 Gew.-%, einer oder mehrerer Omega-3-Fettsäure(n) und/oder einer oder mehrerer Omega-6-Fettsäure(n) aufweist. Vorzugsweise ist die Triglyceridfraktion flüssig und besonders bevorzugt mindestens ein pflanzliches Öl.

Unter einer "Triglyceridfraktion" wird erfindungsgemäß die Summe aller in der Zusammensetzung enthaltenen Triglyceride, das heißt der Dreifachester des Glycerins mit drei Fettsäuremolekülen, verstanden. Dabei spielt es zur Bestimmung der Triglyceridfraktion keine Rolle, aus welchem eingesetzten Rohstoff die Triglyceride stammen.

Die Fettsäurenverteilung einer Triglyceridfraktion gibt erfindungsgemäß die Masseanteile der unterschiedlichen Fettsäuren bezogen auf die Gesamtmasse der Fettsäuren in der Triglyceridfraktion an; die unterschiedlichen Anteile werden dabei üblicherweise nach Freisetzung der Fettsäuren als Methylester gaschromatographisch bestimmt. Die Masse des Glycerins geht dementsprechend in diese Berechnung nicht mit ein.

Erfindungsgemäß bevorzugte Omega-3-Fettsäuren sind Hexadecatriensäure (16:3; (ω-3)), Alpha-Linolensäure (18:3 (ω-3)), Stearidonsäure (18:4; (ω-3)), Eicosatriensäure (20:3; (ω-3)), Eicosatetraensäure (20:4; (ω-3)), Eicosapentaensäure (20:5; (ω-3)), Heneicosapentaensäure (21:5; (ω-3)), Docosapentaensäure (22:5; (ω-3)), Docosahexaensäure (22:6; (ω-3)), Tetracosapentaensäure (24:5; (ω-3)) und Tetracosahexaensäure (24:6; (ω-3)). Erfindungsgemäß besonders bevorzugte Omega-3-Fettsäuren sind Alpha-Linolensäure (18:3 (ω-3)) und Eicosapentaensäure (20:5; (ω-3)). Die Alpha-Linolensäure (18:3 (ω-3)) ist erfindungsgemäß eine ganz besonders bevorzugte Omega-3-Fettsäure

Erfindungsgemäß bevorzugte Omega-6-Fettsäuren sind Linolsäure (18:2; (ω-6)), Gamma-Linolensäure (18:3; (ω-6)), Calendulasäure (18:3; (ω-6)), Eicosadiensäure (20:2; (ω-6)), Dihomogammalinolensäure (20:3; (ω-6)), Arachidonsäure (20:4; (ω-6)), Docosadiensäure (22:2; (ω-6)), Docosatetraensäure (22:4; (ω-6)), Docosapentaensäure (22:5; (ω-6)), Tetracosatetraensäure (24:4; (ω-6)) und Tetracosapentaensäure (24:5; (ω-6)). Erfindungsgemäß besonders bevorzugte Omega-6-Fettsäuren sind Linolsäure (18:2; (ω-6)), Gamma-Linolensäure (18:3; (ω-6)) und Arachidonsäure (20:4; (ω-6)), Die Linolsäure (18:2 (ω-6)) ist erfindungsgemäß eine ganz besonders bevorzugte Omega-6-Fettsäure.

Besonders gute mechanische Eigenschaften konnten erhalten werden, wenn die Triglyceridfraktion eine Fettsäurenverteilung mit einem Anteil von mindestens 4 Gew.-%, insbesondere mindestens 20 Gew.-%, einer oder mehrerer Omega-3-Fettsäure(n) aufweist.

Es hat sich als erfindungsgemäß vorteilhaft erwiesen, wenn mindestens 40 Gew.-%, insbesondere 60 Gew.-%, ganz besonders 100 Gew.-% der Triglyceridfraktion bei 25°C flüssig ist, das heißt in Form eines Öles vorliegt.

Weiterhin hat es sich als vorteilhaft erwiesen, wenn die Triglyceridfraktion mit den erfindungsgemäßen Anteilen an Omega-3-Fettsäuren und/oder Omega-6-Fettsäuren aus einer natürlichen Quelle, beispielsweise entsprechenden pflanzlichen und/oder tierischen Ölen stammen. Obwohl pflanzliche Öle dabei erfindungsgemäß besonders bevorzugt sind, ist auch ein Einsatz von tierischen Ölen, wie beispielsweise Fischöl oder Lebertranöl erfindungsgemäß mit umfasst.

Erfindungsgemäße Triglyceridfraktionen sind beispielsweise in Sonnenblumenöl, Rapsöl, Sojaöl, Tallöl, Rizinusöl, Leindotteröl, Tungöl, Leinöl und/oder Hanföl enthalten. Die Triglyceridfraktion wird daher vorzugsweise in Form von Sonnenblumenöl, Rapsöl, Sojaöl, Tallöl, Rizinusöl, Leindotteröl, Tungöl, Leinöl, Hanföl und Mischungen davon, insbesondere Tallöl, Leinöl, Hanföl und/oder Rizinusöl, besonders bevorzugt Leinöl und Hanföl eingesetzt. Der Einsatz von Leinöl ist ganz besonders bevorzugt, insbesonder Lackleinöl, welches ein aufgereinigtes Leinöl darstellt. Auch der Einsatz einer Kombination aus zwei, drei oder mehreren geeigneten Ölen, wie beispielsweise
- Sonnenblumenöl und Rapsöl
- Sonnenblumenöl und Sojaöl
- Sonnenblumenöl und Tallöl,
- Sonnenblumenöl und Leindotteröl
- Sonnenblumenöl und Tungöl,
- Sonnenblumenöl und Leinöl,
- Sonnenblumenöl und Hanföl,
- Rapsöl und Sojaöl,
- Rapsöl und Tallöl,
- Rapsöl und Leindotteröl,
- Rapsöl und Tungöl,
- Rapsöl und Leinöl,
- Rapsöl und Hanföl,
- Sojaöl und Tallöl,
- Sojaöl und Leindotteröl,
- Sojaöl und Tungöl,
- Sojaöl und Leinöl,
- Sojaöl und Hanföl,
- Tallöl und Leindotteröl,
- Tallöl und Tungöl,
- Tallöl und Leinöl,
- Tallöl und Hanföl,
- Leindotteröl und Tungöl,
- Leindotteröl und Leinöl,
- Leindotteröl und Hanföl,
- Tungöl und Leinöl,
- Tungöl und Hanföl oder
- Leinöl und Hanföl
liegt im Umfang der vorliegenden Erfindung.

In verschiedenen Ausführungsformen bestehen die eingesetzen Öle zu mindestens 50 Gew.-%, vorzugsweise mindestens 70 Gew.-%, noch bevorzugter mindestens 90 Gew.-%, am bevorzugtesten zu 100 Gew.-% aus den beschriebenen Triglyceridfraktionen.

Die Triglyceridfraktion, beziehungsweise das die Triglyceridfraktion enthaltende Öl, ist in den erfindungsgemäßen hitzehärtbaren Zusammensetzungen vorzugsweise in einer Menge von 1 bis 40 Gew.-%, insbesondere von 1 bis15 Gew.-%, bezogen auf die gesamte Zusammensetzung enthalten.

Als weiteren Bestandteil enthalten die erfindungsgemäßen hitzehärtbaren Zusammensetzungen mindestens ein Vulkanisationsmittel. Die Vernetzungs- bzw. Härtungsreaktion der Kautschukzusammensetzung haben einen entscheidenden Einfluss auf die Abdichtfunktion, auf die Beschichtung sowie auf die versteifende Wirkung oder Festigkeit des Bauteils, daher muss das Vulkanisationssystem und ggf. die Treibmittelzusammensetzung besonders sorgfältig ausgewählt und abgestimmt werden. In verschiedenen Ausführungsformen wird das Vulkanisationsmittel ausgewählt aus Vulkanisationssystemen auf der Basis von elementarem Schwefel, Thiuramdisulfiden, organischen Peroxiden, polyfunktionellen Aminen, Chinonen, Chinondioximen, wie z.B. p-Benzochinondioxim, und Nitrosobenzolen, wie z.B. p-Nitrosobenzol und Dinitrosobenzol. In bevorzugten Ausführungsformen wird das Vulkanisationsmittel ausgewählt aus der Gruppe bestehend aus:
(I) Schwefel,
(II) peroxidischen Vulkanisationssystemen,
(III) Chinonen und/oder Chinondioximen und/oder
(IV) Dinitrosobenzolen.

In einer ersten bevorzugten Ausführungsform wird als Vulkanisationsmittel synthetischer oder natürlicher Schwefel eingesetzt. Vorzugsweise wird erfindungsgemäß pulverförmiger Schwefel verwendet; es kann aber auch zur Vermeidung von Staubbelastung in der Produktion bevorzugt sein, Schwefel in Abmischung mit einem Staub-bindenden Mittel, beispielsweise vermischt mit Mineralöl, Paraffinöl oder Siliziumdioxid einzusetzen. Dabei kann der Gehalt der Staub-bindenden Öle durchaus so gewählt sein, dass eine Schwefel-haltige Paste als Rohstoff zum Einsatz kommt. Bevorzugt wird Schwefel in der S₈-Konfiguration verwendet.

Der Aktivsubstanzgehalt an Schwefel in den erfindungsgemäßen Zusammensetzungen kann dabei in weiten Grenzen variieren, er kann bis zu 20 Gew.-%, vorzugsweise bis etwa 15 Gew.-%, insbesondere bis zu 10 Gew.-%, jeweils bezogen auf die gesamte hitzehärtbare Zusammensetzung, betragen; die Untergrenze sollte vorzugsweise nicht unter 0,5 Gew.-% liegen. Pulverförmiger Schwefel kann in verschiedenen Ausführungsformen in Mengen von 4 bis 15 Gew.%, bezogen auf die Gesamtzusammensetzung eingesetzt werden, besonders bevorzugt werden Mengen zwischen 5 und 8% eingesetzt. Dabei hängt der Gehalt an Schwefel von der Reaktivität der eingesetzten Flüssigkautschuke sowie gegebenenfalls dem Einsatz von Polymerisationsadditiven ab.

In einer zweiten bevorzugten Ausführungsform werden radikalische Vulkanisationsmittel, auf der Basis von organischen oder anorganischen Peroxiden, eingesetzt. Beispiele für erfindungsgemäß bevorzugte Peroxide sind Diacetylperoxid, Di-tert.butylperoxid, Dicumylperoxid sowie Dibenzoylperoxid. Die Peroxide sind als Vulkanisationsmittel in den erfindungsgemäßen Zusammensetzungen in Mengen von 0,2 Gew.-% bis 3 Gew.-% enthalten.

In einer dritten bevorzugten Ausführungsform werden Chinone und/oder Chinondioxime als Vulkanisationsmittel eingesetzt. Ein besonders bevorzugter Vertreter dieser Gruppe ist das p-Benzochinondioxim. Die Chinone und/oder Chinondioxime werden in den erfindungsgemäßen Zusammensetzungen vorzugsweise in Konzentrationen von 0,2 Gew.-% bis 5 Gew.-% eingesetzt. Diese Chinon-basierten Vulkanisationsmittel werden bevorzugt phlegmatisiert in Pastenform, beispielsweise in Abmischung wie Mineralölen, verwendet, wobei der Aktivsubstanzgehalt üblicherweise von 40 Gew.-% und 70 Gew.-% beträgt.

In einer vierten bevorzugten Ausführungsform werde Dinitrosobenzole, insbesondere das 1,4-Dinitrosobenzol, als Vulkanisationsmittel verwendet. Diese Stoffgruppe wird vorzugsweise in den erfindungsgemäßen Zusammensetzungen in einer Konzentration von 0,2 Gew.-% bis 5 Gew.-%, jeweils bezogen auf die gesamte hitzehärtbare Zusammensetzung, eingesetzt.

Schwefel ist ein ganz besonders bevorzugtes Vulkanisationsmittel.
Unabhängig von der speziellen Ausführungsform hat es sich als besonders vorteilhaft erwiesen, wenn das Vulkanisationsmittel in Kombination mit
- organischen Härtungsbeschleuniger, wie beispielsweise Dithiocarbamaten (in Form ihrer Ammonium- bzw. Metallsalze), Xanthogenate, Sulfenamiden, Thiuram-Verbindungen (Monosulfide und Disulfide), Thiazolverbindungen, Aldehyd/Aminbeschleuniger (z.B. Hexamethylentetramin), Dithiophosphat sowie Guanidinbeschleuniger, ganz besonders bevorzugt wird Dibenzothiazyldisulfid (MBTS), 2-Mercaptobenzthiazol (MBT), dessen Zinksalz (ZMBT) oder Diphenylguanidin, und/oder
- Metalloxiden, wie beispielsweise Zinkoxid,
eingesetzt wird. Zusätzlich können typische Kautschukvulkanisationshilfsmittel wie beispielsweise Fettsäuren (beispielsweise Stearinsäure) in der Formulierung vorhanden sein.

Erfindungsgemäß werden besonders vorteilhafte Vulkanisationseigenschaften sowie Endeigenschaften der ausgehärteten Kautschuk-Zusammensetzungen erzielt, wenn ein kombiniertes Vulkanisationssystem aus elementarem Schwefel, oben genannten organischen Beschleunigern und Chinondioximen eingesetzt werden. Beispielhaft erwähnt sei p-Benzochinondioxim es können jedoch auch andere Chinondioxime in Kombination mit den vorgenannten Schwefelsystemen eingesetzt werden.

Organische Beschleuniger werden in Mengen zwischen 0 und 10 Gew.-% bezogen auf die Gesamtformulierung, bevorzugt zwischen 3 und 8 Gew.-%, eingesetzt.

Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 0 und 10 Gew.-%, vorzugsweise zwischen 3 und 7 Gew.-%.

Die Zusammensetzungen, die hierin beschrieben werden, können ferner weitere Bestandteile enthalten, die ausgewählt werden aus Füllstoffen, inklusive Rheologiehilfsmitteln, Pigmenten, Klebrigmachern und/oder Haftvermittlern, Treibmitteln, Extenderölen, Alterungsschutzmitteln und Kombinationen davon.

Als Füllstoffe sind insbesondere anorganische Füllstoffe bevorzugt. Als erste Gruppe anorganischer Füllstoffe kommen beispielsweise die diversen gemahlenen oder gefällten Kreiden, Calcium-Magnesiumcarbonate, Calciumoxid, Schwerspat sowie insbesondere silikatische Füllstoffe vom Typ des Aluminium-Magnesium-Calcium-Silicats, beispielsweise Wollastonit oder Chlorit, oder Alumunium-Borosilikatgläser in Frage. Kreiden sind erfindungsgemäß bevorzugte anorganische Füllstoffe; ganz besonders bevorzugt sind gemahlene mineralische Kreiden. Weiterhin ist Calciumoxid ein besonders bevorzugter anorganischer Füllstoff im Sinne der vorliegenden Erfindung. Der Gehalt an Calciumcarbonat und/oder Calciumoxid kann vorzugsweise zwischen 5 Gew.-% bis etwa 50 Gew.-% bezogen auf die gesamte hitzehärtbare Zusammensetzung variieren. Bei Calciumoxid sind Konzentrationen von 0 und etwa 10 Gew.-% bezogen auf die gesamte hitzehärtbare Zusammensetzung üblich.

Es kann unter Umständen zweckmäßig sein, dass zumindest ein Teil der anorganischen Füllstoffe Oberflächen-vorbehandelt ist; insbesondere hat sich bei den verschiedenen Calciumcarbonaten und Kreiden eine Beschichtung mit mindestens einer Fettsäure, insbesondere mit Stearinsäure, als zweckmäßig erwiesen.

Eine zweite Gruppe anorganischer Füllstoffe, die in den hitzehärtbaren Zusammensetzungen eingesetzt werden können, sind die blättchenförmigen Füllstoffe. Besonders bevorzugt sind hitzehärtbare Zusammensetzungen, die mindestens einen blättchenförmigen Füllstoff, wie beispielsweise Graphit, Vermiculit, Glimmer, Talk oder ähnliche Schichtsilikate enthalten. Graphit ist ein besonders bevorzugter blättchenförmiger Füllstoff im Sinne der vorliegenden Erfindung. Die blättchenförmigen Füllstoffe werden vorzugsweise eingesetzt, wenn ein positiver Einfluss auf die akustischen Eigenschaften gewünscht ist. Der Gehalt an blättchenförmigen Füllstoffen kann vorzugsweise zwischen 5 Gew.-% bis zu 30 Gew.-% betragen.

Eine dritte Gruppe erfindungsgemäß bevorzugter anorganischer Füllstoffe sind die Rheologieadditive oder Rheologiehilfsmittel, die einen Einfluß auf die Rheologie und/oder Festigkeit der Zusammensetzungen haben können. Obwohl die Rheologie der erfindungsgemäßen Zusammensetzungen auch durch die Auswahl der oben genannten Füllstoffe und das Mengenverhältnis der niedermolekularen Flüssigkautschuke in den gewünschten Bereich gebracht werden kann, können konventionelle Rheologiehilfsmittel wie z.B. pyrogene Kieselsäuren, Bentone oder fibrillierte oder Pulp-Kurzfasern im Bereich zwischen 0,1 und 7% oder auch hydrierte Ricinusöl-Derivate - bekannt z.B. unter dem Handelsnamen Rilanit (Fa. Cognis) - zugesetzt werden. Erfindungsgemäß werden die Rheologieadditive vorzugsweise ausgewählt aus Siliziumdioxid und/oder Ruß. Dabei umfasst der Begriff "Siliziumdioxid" erfindungsgemäß auch die als "Kieselsäure" oder angelsächsisch als "silica" bezeichneten Oxidformen des Siliziums.

Es kann erfindungsgemäß bevorzugt sein, wenn die Zusammensetzungen mindestens ein oberflächenmodifiziertes Siliziumdioxid enthalten; besonders vorteilhafte Eigenschaften als oberflächenmodifiziertes Siliziumdioxid weisen hydrophil modifizierte Siliziumdioxide auf.

Besonders bevorzugt sind erfindungsgemäß oberflächenmodifizierte Siliziumdioxidtypen mit einer spezifischen Oberfläche von mindestens 100m²/g, insbesondere von mindestens 150m²/g (jeweils gemessen nach der BET-Methode).

Unter Ruß wird erfindungsgemäß vorzugsweise industriell hergestellter Ruß verstanden, der im Englischen auch als "Carbon Black" bezeichnet wird.

Ein Gehalt von 0 bis 5 Gew.-%, insbesondere 0,1 bis 4 Gew.-%, ganz besonders 0,5 bis 3Gew.-% eines Rheologieadditivs, vorzugsweise ausgewählt aus Siliziumdioxid und/oder Ruß, bezogen auf die gesamte hitzehärtbare Zusammensetzung ist besonders bevorzugt.

Es ist erfindungsgemäß bevorzugt, wenn die hitzehärtbaren Zusammensetzungen eine Kombination aus zwei oder mehr anorganischen Füllstoffen enthält. Insbesondere eine Kombination aus
- mindestens einem anorganischen Füllstoff ausgewählt aus Calciumcarbonat und/oder Calciumoxid und
- mindestens einem Rheologieadditiv
ist erfindungsgemäß besonders bevorzugt.

Eine erfindungsgemäß ganz besonders bevorzugte Füllstoffkombination ist die Kombination: Calciumoxid, Calciumcarbonat und Kieselsäure oder Ruß.

Die anorganischen Füllstoffe werden vorzugsweise in einer Menge von 1 bis 40 Gew.-%, insbesondere von 10 bis 35 Gew.-%, jeweils bezogen auf die Masse der gesamten hitzehärtbaren Zusammensetzung eingesetzt.

Zusätzlich zu den vorgenannten "normalen" anorganischen Füllstoffen können die erfindungsgemäßen Zusammensetzungen so genannte Leichtfüllstoffe enthalten. Unter einem Leichtfüllstoff wird erfindungsgemäß ein Füllstoff verstanden, der eine niedrigere Dichte als die restliche Zusammensetzung aufweist. Durch die Zugabe derartiger Leichtfüllstoffe wird dementsprechend die Gesamtdichte der Zusammensetzung verringert. Leichtfüllstoffe werden vorzugsweise ausgewählt aus der Gruppe der Glashohlkugeln, Flugasche (Fillite), Kunststoffhohlkugeln, beispielsweise auf der Basis von Phenolharzen, Epoxidharzen oder Polyestern, keramischen Hohlkugeln oder organischen Leichtfüllstoffen natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt sind dabei Leichtfüllstoffe auf der Basis von Mikrohohlkugeln, dies können die vorgenannten Glashohlkugeln oder aber auch die expandierbaren oder expandierten Kunststoffmikrohohlkugeln auf der Basis von Polyvinylidenchlorid-Copolymeren oder Acrylnitril-Copolymeren sein, letztere sind unter den Namen "Dualite" beziehungsweise "Expancel" von den Firmen Pierce & Stevens beziehungsweise Akzo Nobel im Handel erhältlich.

Leichtfüllstoffe sind in den hitzehärtbaren Zusammensetzungen vorzugsweise in einer Menge von 0,1 bis 15 Gew.-%, insbesondere von 0,4 bis 7Gew.-%, bezogen auf die gesamte hitzehärtbare Zusammensetzung enthalten.

Der Gesamtanteil an Füllstoffen in der hitzehärtbaren Formulierung kann zwischen 10 und 70 Gew.-% variieren, der Vorzugsbereich liegt zwischen 25 und 60 Gew.-%.

In einigen Ausführungsformen können die hitzehärtbaren Zusammensetzungen zusätzlich zu den genannten Polymeren mindestens ein weiteres synthetisches, flüssiges Polymer enthalten, das mindestens eine C=C-Doppelbindung und/oder mindestens eine CΞC-Dreifachbindung aufweist. Vorzugsweise ist das mindestens eine weitere synthetische, flüssige Polymer in einer Menge von 1 bis 20 Gew.-%, insbesondere 3 bis 15 Gew.-% bezogen auf die Gesamtzusammensetzung enthalten. Diese Polymere sind vorzugsweise aus der folgenden Gruppe der Homo- und/oder Copolymeren ausgewählt:
- Polybutadiene, insbesondere die 1,4- und 1,2-Polybutadiene,
- Polybutene,
- Polyisobutylene,
- Styrol-Butadien-Copolymere und
- Butadienacrylnitril-Copolymere.
Bevorzugt enthalten die hitzehärtbaren Zusammensetzungen zusätzlich mindestens ein weiteres flüssiges Polybutadien, insbesondere ein 1,4- und/oder 1,2-Polybutadien. Bevorzugt hat das mindestens eine weitere flüssige Polybutadien ein Molekulargewicht zwischen 900 und 10000, vorzugsweise zwischen 2000 und 5000. Die Zugabe eines Polybutadien wirkt sich vorteilhaft auf die Elastizität der resultierenden Produkte aus.

Die hitzehärtbaren Zusammensetzungen der Erfindung können ferner zum Erzielen einer Aufschäumung während des Härtungsvorganges prinzipiell alle gängigen Treibmittel enthalten, vorzugsweise werden jedoch organische Treibmittel aus der Klasse der Azoverbindungen, N-Nitrosoverbindungen, Sulfonylhydrazide oder Sulfonylsemicarbazide verwendet. Für die erfindungsgemäß zu verwendenden Azoverbindungen seien beispielhaft das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis(benzolsulfonsäurehydrazid), das Diphenylsulfon-3,3'-disulfohydrazid oder das Benzol-1,3-disulfohydrazid und aus der Klasse der Semicarbazide das p-Toluolsulfonylsemicarbazid genannt.

An die Stelle der vorgenannten Treibmittel können auch die sogenannten expandierbaren Mikrohohlkugeln ("expandable microspheres"), d.h. nicht expandierte thermoplastische Polymerpulver treten, die mit niedrigsiedenden organischen Flüssigkeiten getränkt bzw. gefüllt sind. Derartige "Microspheres" sind beispielsweise in der EP-A-559254, der EP-A-586541 oder der EP-A-594598 beschrieben. Obwohl nicht bevorzugt, können auch bereits expandierte Mikrohohlkugeln verwendet bzw. mit verwendet werden. Gegebenenfalls können diese expandierbaren / expandierten Mikrohohlkugeln in beliebigem Mengenverhältnis mit den oben genannten "chemischen" Treibmitteln kombiniert werden. Die chemischen Treibmittel könnten in schäumbaren Zusammensetzungen in Mengen zwischen 0,1 und 3 Gew.%, vorzugsweise zwischen 0,2 und 2 Gew. %, die Mikrohohlkugeln zwischen 0,1 und 4 Gew. %, vorzugsweise zwischen 0,2 und 2 Gew. % verwendet werden.

In einem bevorzugten Gegenstand handelt es sich bei den Zusammensetzungen um kompakte Systeme und nicht um schäumbare Zusammensetzungen, Kompakte Systeme weisen vorzugsweise eine maximale Expansion nach der Reaktion auf, die kleiner als 10 % bezogen auf das Anfangsvolumen ist. Die Expansion beschreibt die Volumenvergrößerung während der Reaktion der Zusammensetzung, wobei das Volumen der eingesetzten Zusammensetzung mit dem Volumen der abreagierten Zusammensetzung verglichen wird. Bevorzugt enthält die Zusammensetzungen keine chemischen Treibmittel.

In einer weiteren Ausführungsform ist es bevorzugt, wenn die erfindungsgemäßen hitzehärtbaren Zusammensetzungen weiterhin mindestens ein Antioxidans enthalten. Diese können gegen den thermischen, thermooxidativen oder Ozon-Abbau der erfindungsgemäßen Zusammensetzungen schützen.

Erfindungsgemäß geeignet sind zum einen die herkömmlichen synthetischen Antioxidantien, wie beispielsweise sterische gehinderte Phenole oder Aminderivate. Beispiele für synthetische Antioxidantien sind die unter der Handelsbezeichnung Wingstay® im Handel erhältlichen Produkte sowie das 2,2 Methylen-bis-(4 Methyl-6-tert.-Butylphenol) und das 2,6-Ditert.butyl-p-kresol (3,5-Ditert-butyl-4-hydroxytoluol).

Zum anderen sind auch natürliche Antioxidantien erfindungsgemäß geeignet. Unter einem natürlichen Antioxidans wird eine Verbindung verstanden, die aus natürlich nachwachsenden Rohstoffen gewonnen werden kann. Beispiele für diese Stoffgruppe sind Tocopherol, Squalen und Sesamolin.

Die Antioxidantien, insbesondere die natürlichen Antioxidantien, werden in den erfindungsgemäßen hitzehärtbaren Zusammensetzungen vorzugsweise in Mengen von 0,1 bis 5 Gew.-%, insbesondere von 0,2 bis 3 Gew.-%, jeweils bezogen auf die gesamte hitzehärtbare Zusammensetzung, eingesetzt.

Weiterhin können die erfindungsgemäßen hitzehärtbaren Zusammensetzungen die für diese Art der Zusammensetzung typischen Bestandteile enthalten.

Obwohl die erfindungsgemäßen Zusammensetzungen aufgrund des bevorzugten Gehaltes an Flüssigkautschuk mit funktionellen Gruppen in der Regel bereits eine sehr gute Haftung auf den Substraten haben, können, falls erforderlich, Klebrigmacher und/oder Haftvermittler zugesetzt werden. Hierzu eignen sich beispielsweise Kohlenwasserstoffharze, Phenolharze, TerpenPhenolharze, Resorcinharze oder deren Derivate, modifizierte oder unmodifizierte Harzsäuren beziehungsweise -ester (Abietinsäurederivate), Polyamine, Polyaminoamide, Polyepoxydharze, Anhydride und Anhydrid-gruppen enthaltende Copolymere. Art und Menge der Klebrigmacher beziehungsweise der Haftvermittler hängt von der Polymerzusammensetzung des Kleb-/Dichtstoffes sowie der Beschichtungszusammensetzung ab, von der Festigkeit der gehärteten Zusammensetzung und von dem Substrat, auf welches die Zusammensetzung appliziert wird. Typische klebrigmachende Harze (Tackifier) wie beispielsweise die Terpenphenolharze oder Harzsäurederivate werden normalerweise in Konzentrationen zwischen 5 und 20 Gew.-% verwendet, typische Haftvermittler wie Polyamine, Polyaminoamide oder Resorcinderivate werden im Bereich zwischen 0,1 und 10 Gew.-% verwendet.

Die erfindungsgemäßen Zusammensetzungen sind frei von Weichmachern, insbesondere Phthalsäureestern. Bevorzugt sind die Zusammensetzungen frei von Lösungsmitteln, insbesondere frei von Weichmachern und Lösungsmitteln. Vorzugsweise sind die Zusammensetzungen auch frei von Extenderölen.

Gegebenenfalls können die erfindungsgemäßen Zusammensetzungen noch fein verteilte thermoplastische Polymerpulver enthalten. Beispiele für geeignete thermoplastische Polymere sind Polypropylen, Polyethylen, thermoplastische Polyurethane, Methacrylatcopolymere, Styrolcopolymere, Polyvinylchlorid, Polyvinylacetal sowie insbesondere Polyvinylacetat und dessen Copolymere wie beispielsweise Ethylenvinylacetatcopolymere. Obwohl die Teilchengröße bzw. Teilchengrößenverteilung der Polymerpulver nicht besonders kritisch zu sein scheint, sollte die mittlere Teilchengröße unter 1mm, vorzugsweise unter 350 µm liegen. Die Menge des ggf. zugesetzten thermoplastischen Polymerpulvers liegt zwischen 0 und 20 Gew.%, bevorzugt zwischen 2 und 10 Gew.%.

Die erfindungsgemäßen Zusammensetzungen weisen gegenüber dem Stand der Technik Fließeigenschaften auf, die sehr ähnlich denen von Plastisolen sind, ohne dass sie deren vorgenannte unvorteilhaften Eigenschaften haben. Dies bedeutet, dass sie die guten Verarbeitungseigenschaften in Bezug auf Rheologie der konventionellen Plastisole aufweisen, gleichzeitig aber die sehr guten Alterungsbeständigkeiten und Festigkeitswerte der konventionellen vulkanisierbaren (härtbaren) Kautschuk-Zusammensetzungen besitzen. Aus diesem Grund könnte man auch von "Kautschuk-Plastisolen" sprechen, obwohl ihre Zusammensetzungen nicht denen typischer Plastisole entsprechen.

Wenn die erfindungsgemäßen hitzehärtbaren Zusammensetzungen, insbesondere als Beschichtungsmassen eingesetzt werden sollen, hat es sich als erfindungsgemäß bevorzugt erwiesen, wenn diese vor der Härtung eine Viskosität bei 20°C von 1000 mPa·s bis 100.000 mPa·s gemessen nach DIN 53019 aufweisen. Besondere Vorzugsbereiche für die Viskosität von hitzehärtbaren Zusammensetzungen sind:
bei 20°C: 15.000 mPa·s - 80.000 mPa·s und
bei 40°C: 5.000 mPa·s - 20.000 mPa s.

Wenn die erfindungsgemäßen hitzehärtbaren Zusammensetzungen als Kleb- und Dichtstoffe, Versiegelung oder als Unterfütterungsklebstoffe eingesetzt werden sollen, hat es sich als erfindungsgemäß bevorzugt erwiesen, wenn diese vor der Härtung die folgenden Viskositäten gemessen nach DIN 53019 aufweisen:
bei 20°C: 150.000 mPa·s - 400.000 mPa·s und
bei 40°C: 100.000 mPa·s - 200.000 mPa·s.

Die erfindungsgemäßen hitzehärtbaren Zusammensetzungen können durch Mischung der ausgewählten Komponenten in einem beliebigen, geeigneten Mischer, wie beispielsweise einem Dispersionsmischer, einem Planetenmischen, einem Kneter, einem Doppelschneckenmischer, einem kontinuierlichen Mischer, einem Innenmischer, einem sogenannten "Banbury-Mischer" oder einem Extruder und ähnlichen dem Fachmann bekannten Mischaggregaten, insbesondere einem Doppelschneckenextruder hergestellt werden.

Unabhängig von der Wahl des Werkzeugs kann es gegebenenfalls vorteilhaft sein, eine geringfügige Erhitzung der Zusammensetzung zuzulassen beziehungsweise die Zusammensetzung geringfügig zu erwärmen, um die Erreichung einer homogenen, einheitlichen Masse zu erleichtern; es muss aber unbedingt dafür Sorge getragen werden, dass keine Temperaturen erreicht werden, die eine Aktivierung der Vulkanisationsreaktion bewirken.

Ein weiterer Gegenstand der vorliegenden Erfindung ist dementsprechend die Herstellung der erfindungsgemäßen hitzehärtbaren Zusammensetzung durch Mischen der Komponenten unter hoher Scherung.

Die Lagerung der erfindungsgemäßen Zusammensetzungen bis zur Anwendung erfolgt vorzugsweise in Gebinden von 1000 Liter (Container), 200 Liter (Fässer), 20 bis 50 Liter (Hobbocks), für Großanwendungen im Tankzug oder Tagestank (20.000 Liter) sowie insbesondere für die Handapplikation in Kartuschen von 310 bis 500 ml.

Zum Zeitpunkt der Anwendung wird die erfindungsgemäße hitzehärtbare Zusammensetzung mit herkömmlichen, gegebenenfalls beheizten Pumpen aus dem Lagerbehältnis zum Ort der Anwendung transportiert und dort appliziert. Die erfindungsgemäßen Zusammensetzungen zeichnen sich dadurch aus, dass sie durch Spritztechniken appliziert werden können. Insbesondere eine Applikation der Zusammensetzungen mittels Airless-, Air-assisted, Airmix-Spritzverfahren oder Flat-Stream-Verfahren auf das Substrat ist erfindungsgemäß besonders bevorzugt. Eine Applikation der erfindungsgemäßen Zusammensetzungen mittels eines Flat-Stream-Verfahrens ist erfindungsgemäß ganz besonders bevorzugt.
Zur Anwendung im bevorzugten Hochdruck-Spritzverfahren können dabei zerstäubende Spritzverfahren oder nicht zerstäubende Spritzverfahren zum Einsatz kommen. Die Materialzerstäubung der Zusammensetzung zur Applikation ist unter dem reinen Materialdruck mit dem Airless-Verfahren oder durch zusätzliche Luftunterstützung im Air-assisted oder Airmix- Spritzverfahren möglich. Erfindungsgemäß besonders bevorzugt werden für die Applikation der Zusammensetzung nicht-zerstäubende Applikationsverfahren wie das Flat-Stream-Verfahren oder das Elektro-Swirl-Verfahren eingesetzt. Bei beiden Verfahren kann die Endschichtdicke der Zusammensetzung in nur einer Applikationsbewegung mit hohen Auftragsgeschwindigkeiten von > 100 mm/sec in Schichtdicken bis zu 5 mm auf das Substrat aufgetragen werden.

Ein Auftrag der erfindungsgemäßen Zusammensetzungen mit einem der beiden genannten nichtzerstäubenden Applikationsverfahren Flatstream und Elektro-Swirl zeichnet sich durch einen randscharfen Materialauftrag auf das Substrat ohne Overspray, dass heißt ohne Verunreinigung des Substrates neben der Applikationsstelle durch Spritznebel, durch niedrige Spritzdrücke im Bereich 60 - 180 bar und eine sehr hohe Wiederholgenauigkeit bei mehrfacher Serienapplikation aus.

Die Aushärtung der applizierten hitzehärtbaren Zusammensetzung erfolgt generell durch Erhitzung, wobei die Zusammensetzung für eine bestimmte Zeit auf eine Temperatur erhitzt wird, die ausreichend ist, um die Vulkanisationsreaktion zu bewirken. Dabei ist es erfindungsgemäß bevorzugt, wenn die Vulkanisationsreaktion während dieser Erhitzungszeit vollständig abgeschlossen wird; es kann aber auch Verfahren mit kurzen Ofendurchlaufzeiten und Nachvernetzung in Folgeöfen und im Einzelfall sogar Nachvernetzung nach der Zeit im Ofen geben.

In Abhängigkeit von der Zusammensetzung der Zusammensetzung und den Bedingungen der Fertigungslinie liegen derartige Temperaturen üblicherweise im Bereich von 150°C bis 230°C für Rohbaulinien, vorzugsweise 160°C bis 185°C, mit einer Verweilzeit von 10 bis 90 Minuten, vorzugsweise von 15 bis 30 Minuten. Für die Lacklinie liegen die Temperaturen bei 120°C bis 175°C, vorzugsweise 130°C bis 160°C mit einer Verweilzeit von 5 bis 60 Minuten, bevorzugt von 10 bis 30 Minuten.

Die Art der Wärmequelle spielt prinzipiell keine Rolle, so kann die Wärmezufuhr beispielsweise durch ein Heißluftgebläse, durch Bestrahlung mit Mikrowellen oder Infrarotstrahlung, durch magnetische Induktion oder auch durch Heizzangen erfolgen. Im Bereich des Fahrzeugbaus sowie in Technologiefeldern mit verwandten Herstellprozessen ist es besonders vorteilhaft, wenn die Härtung der erfindungsgemäßen Zusammensetzungen während der Passage des Fahrzeugs durch den Ofen zur Aushärtung der kathodischen Tauchlackierung oder zum Einbrennen der Lackbeschichtungen erfolgt, so dass auf einen separaten Erhitzungsschritt verzichtet werden kann.

Für die Härtungs- und ggf. Aufschäumreaktion der Zusammensetzungen stehen dann die Prozesstemperaturen der verschiedenen Lacköfen zur Verfügung, d.h. ein Temperaturbereich zwischen 80°C und 240°C für etwa 10 bis 35 Minuten, vorzugsweise dient der Durchlauf der Karosserie bzw. der Teile durch den so genannten "EC-Ofen" zum Aushärten der erfindungsgemäßen Zusammensetzungen, d.h. Temperaturen zwischen 160 °C und 200°C.

Im Fertigungsablauf kann es auch sinnvoll sein, dass nach der Applikation der erfindungsgemäßen Zusammensetzung und dem Fügen der Bauteile eine Vorgelierung bzw. teilweise Aushärtung erfolgt. Hierzu können alle an sich bekannten Vorgeliereinrichtungen wie z.B. Vorgelier-Öfen oder auch Induktionsheizanlagen verwendet werden. Ein typischer Temperaturbereich für die Vorgelierung liegt zwischen 100 °C und 160 °C. Insbesondere bei der Induktionserwärmung ist nur ein sehr kurzzeitiges Erwärmen in Bereich weniger Sekunden notwendig, wobei die Substrattemperatur bis zu 190°C betragen kann und kurzzeitig deutlich darüber liegen kann.

Ein weiterer Aspekt der Erfindung ist die Verwendung der erfindungsgemäßen Zusammensetzungen als, ggf. akustisch dämpfender, einkomponentige Versiegelungsmasse oder Beschichtungsmasse, insbesondere im Automobillackbereich.

Das Hauptanwendungsfeld für die erfindungsgemäßen hitzehärtenden reaktiven Zusammensetzungen ist der so genannte Paintshop in der Automobilindustrie, hier sind die Teile, die später die Blechüberlappungen der Karosserie bilden oder die späteren Fügenähte, gut zugänglich, so dass die Applikation mit herkömmlichen Pump-, Dosier-, Spritz-, oder Extrusions-Einrichtungen für niederviskose, pastöse Materialien vorgenommen werden kann. Die bevorzugten Anwendungsfelder für die erfindungsgemäßen Zusammensetzungen sind Nachtversiegelung und der Unterbodenschutz
Bezüglich der weiteren Details dieses Gegenstandes der vorliegenden Erfindung gilt mutatis mutandis das zu den vorherigen Gegenständen bereits Gesagte.

Ein weiterer Gegenstand der vorliegenden Erfindung betrifft ein Verfahren, insbesondere im Fahrzeugrohbau, zum Verbinden von Bauteilen und/oder Abdichten von Fugen zwischen Bauteilen, insbesondere zur Versiegelung von Grob- und/oder Feinnähten oder zur Unterfütterung oder Verklebung von Bauteilen, bei dem:
a) eine erfindungsgemäße Zusammensetzung auf mindestens ein Bauteil, insbesondere auf die Oberfläche eines solchen Bauteils, vorzugsweise mittels Sprühen oder Extrudieren, appliziert wird;
b) die zu verbindenden Bauteile zusammengefügt werden, gegebenenfalls gefolgt vom (Punkt-)schweißen, Bördeln, Schrauben und/oder Nieten; und
c) die Bauteile zum Aushärten der Zusammensetzung, gegebenenfalls unter mechanischer Fixierung der Bauteile, erhitzt werden.

Die Bauteile sind vorzugsweise Metallteile.

Der Aushärtungsschritt kann mehrere Einzel- oder Zusatz-Schritte beinhalten, wie beispielsweise das partielle Aushärten der Zusammensetzung, beispielsweise durch kurzzeitiges Erwärmen der Teile auf Temperaturen bis zu 190°C, vor dem eigentlichen Aushärtungsschritt und ggf. einen oder mehrere Schritte zum Reinigen/Waschen der gefügten Rohbauteile ggf. gefolgt von üblichen Oberflächenvorbehandlungen. Der eigentliche Aushärtungsschritt kann Elektrotauchlackierung, Härten und/oder Vernetzen der Versiegelungsmasse während des Einbrennens der Elektrotauchlackierung bei Temperaturen zwischen 160 °C und 240 °C einschließen.

Noch ein weiterer Gegenstand der Erfindung ist ein Verfahren zum Beschichten von Bauteilen, wobei das Verfahren beinhaltet:
c) Aufsprühen einer erfindungsgemäßen Zusammensetzung auf die Oberfläche des Bauteils; und
d) Erhitzen des beschichteten Bauteils zum Aushärten der Zusammensetzung.

Bezüglich der weiteren Details dieses Gegenstandes der vorliegenden Erfindung gilt mutatis mutandis das zu den vorherigen Gegenständen bereits Gesagte.

Noch ein weiterer Gegenstand der Erfindung ist ein Verfahren zum Beschichten von Bauteilen durch Aufsprühen einer erfindungsgemäßen Zusammensetzung auf die Oberfläche des Teils und Erhitzen des beschichteten Teils zum Aushärten der Zusammensetzung.

Ebenfalls erfindungsgemäß umfasst ist ein Verfahren zur akustischen Dämpfung von Bauteilen, bei dem mindestens eine Oberfläche des Bauteils mit einer erfindungsgemäßen Zusammensetzung beschichtet wird, und das beschichtete Bauteil zum Aushärten der Zusammensetzung erhitzt wird.

Es ist erfindungsgemäß bevorzugt, wenn die Beschichtung des Bauteils mittels Aufsprühen der erfindungsgemäßen Zusammensetzung erfolgt.

Durch den Auftrag der erfindungsgemäßen Zusammensetzung werden die akustischen Eigenschaften des Bauteils verbessert.

Im Rahmen dieses Gegenstandes der vorliegenden Erfindung hat es sich als besonders vorteilhaft erwiesen, wenn das Aufsprühen der erfindungsgemäßen Zusammensetzung auf das Substrat mittels eines Airless-, Air-assisted-, Airmix- Spritzverfahren, Flat-Stream-Verfahren oder Swirl-Verfahrens erfolgt.

Bezüglich der weiteren Details dieses Gegenstandes der vorliegenden Erfindung gilt ebenfalls mutatis mutandis das zu den vorherigen Gegenständen bereits Gesagte.

In den nachfolgenden Ausführungsbeispielen soll die Erfindung näher erläutert werden, wobei die Auswahl der Beispiele keine Beschränkung des Umfanges des Erfindungsgegenstandes darstellen soll.

### Beispiele

**Zusammensetzung 1**

| *Bestandteil* | *Menge (Gew.-%)* |
|---|---|
| Calciumoxid | 2,00 |
| 4-Methylphenol Reaktionsprodukt mit Dicyclopentadien und Isobutylen | 0,25 |
| Calciumcarbonat, gecoated mit Stearat | 13,77 |
| Gefälltes Calciumcarbonat | 34,59 |
| Schwefel | 6,50 |
| Kieselsäure | 1,69 |
| Zinkdibenzlydithiocarbamat | 0,80 |
| Zink-Mercaptobenzothiazol | 0,90 |
| Glashohlkugeln | 1,00 |
| Lackleinöl | 21,50 |
| Flüssiges 1,3-Polybutadien MG ca. 2600 g/mol | 10,00 |
| Flüssiges Polybutadien mit aktiven Carboxylgruppen MG ca. 1700 g/mol | 3,00 |
| Cis-1,4-Polyisopren MG ca. 28000 g/mol | 4,00 |

**Zusammensetzung 2**

| *Bestandteil* | *Menge (Gew.-%)* |
|---|---|
| Calciumoxid | 4,00 |
| 4-Methylphenol Reaktionsprodukt mit Dicyclopentadien und Isobutylen | 0,50 |
| Calciumcarbonat, gecoated mit Stearat | 16,00 |
| Gefälltes Calciumcarbonat | 24,38 |
| Schwefel | 8,00 |
| Kieselsäure | 1,00 |
| Zinkdibenzlydithiocarbamat | 1,20 |
| Zink-Mercaptobenzothiazol | 0,90 |
| Lackleinöl | 14,00 |
| Flüssiges Polybutadien mit aktiven Carboxylgruppen MG ca. 1700 g/mol | 0,50 |
| Cis-1,4-Polyisopren MG ca. 28000 g/mol | 12,00 |
| Zinkoxid aktiv | 2,00 |
| Russ | 0,05 |
| Ricinusöl | 6,00 |
| Tallöldestillat | 10,00 |

**Zusammensetzung 3**

| *Bestandteil* | *Menge (Gew.-%)* |
|---|---|
| Calciumoxid | 4,00 |
| Titandioxid | 0,50 |
| Calciumcarbonat, gecoated mit Stearat | 16,50 |
| Gefälltes Calciumcarbonat | 31,65 |
| Schwefel | 5,00 |
| Zinkdibenzlydithiocarbamat | 2,20 |
| Zink-Mercaptobenzothiazol | 0,90 |
| Lackleinöl | 25,40 |
| Flüssiges Polybutadien mit aktiven Carboxylgruppen MG ca. 1700 g/mol | 5,00 |
| Cis-1,4-Polyisopren MG ca. 54000 g/mol | 4,80 |
| Zinkoxid aktiv | 3,00 |
| Russ | 0,05 |
| Stearinsäure | 1,00 |

**Zusammensetzung 4**

| *Bestandteil* | *Menge (Gew.-%)* |
|---|---|
| Calciumoxid | 4,00 |
| Titandioxid | 0,25 |
| Calciumcarbonat, gecoated mit Stearat | 12,33 |
| Gefälltes Calciumcarbonat | 27,10 |
| Schwefel | 6,00 |
| Zinkdithiophosphat | 4,00 |
| Zink-Mercaptobenzothiazol | 0,60 |
| Leinöl | 25,00 |
| Flüssiges Polybutadien mit aktiven Carboxylgruppen MG ca. 1700 g/mol | 2,00 |
| Cis-1,4-Polyisopren MG ca. 15000 g/mol | 10,00 |
| Zinkoxid | 0,50 |
| Flüssiges 1,3-Polybutadien MG ca. 1000 g/mol | 4,80 |
| Glashohlkugeln | 3,10 |
| Russ | 0,12 |
| Stearinsäure | 0,20 |

### Messerqebnisse:

### Bestimmung der Shore A Härte

Zur Bestimmung der Shore A Härte wurden die Beispielzusammensetzungen 20 Minuten bei 150°C ausgehärtet. Dann wurden Proben mit einer Materialstärke von 5mm entnommen und bei Raumtemperatur die Shore A Härte bestimmt. Die Messwerte sind in Tabelle 1 zusammengestellt.

### Bestimmung der Reißfestigkeit und Reißdehnung

Die Bestimmung der Reißfestigkeit und Reißdehnung erfolgte gemäß der DIN 53504. Hierzu wurden zur Herstellung der S2-Schulterstäbe Teflonabstandshalter mit einer Dicke von 2 bis 3 mm verwendet und das ungehärtete Material wurde zwischen zwei Platten, die mit Silikonpapier abgedeckt sind, gepresst. Nach der Härtung (20 min bei 150°C) wurden die Probenkörper für die Messung nach der DIN 53504 ausgestanzt.

**Tabelle 1:**

| Zusammensetzung | 1 | 2 | 3 | 4 |
|---|---|---|---|---|
| | | | | |
| Reißfestigkeit in MPa | 1,45 | 0,87 | 1,22 | 0,65 |
| Reißdehnung in % | 35,2 | 54,3 | 45,1 | 61,4 |
| | | | | |
| Shore A Härte in SKT | 54,3 | 44,7 | 50,6 | 41,5 |

Einbrennzyklus: 20 Minuten 150°C Objekttemperatur

## Patentansprüche

1. Hitzehärtbare reaktive Zusammensetzung auf der Basis von natürlichen und/oder synthetischen olefinische Doppelbindungen enthaltenden Elastomeren und Vulkanisationsmitteln, **dadurch gekennzeichnet, dass** die Zusammensetzung
(a) mindestens ein flüssiges Polyisopren in einer Menge von 1 bis 25 Gew.-% bezogen auf die Gesamtzusammensetzung;
(b) mindestens ein funktionalisiertes, flüssiges Polybutadien in einer Menge von 0,1 bis 10 Gew.-% bezogen auf die Gesamtzusammensetzung;
(c) eine Triglyceridfraktion, deren Fettsäurenverteilung einen Anteil von mindestens 5 Gew.-% einer oder mehrerer Omega-3-Fettsäure(n) und/oder einer oder mehrerer Omega-6-Fettsäure(n) aufweist, in einer Menge von 1 bis 40 Gew.-% bezogen auf die Gesamtzusammensetzung; und
(d) mindestens ein Vulkanisationsmittel enthält,
wobei der Anteil an synthetischen Polymeren, welche mindestens eine C=C-Doppelbindung und/oder mindestens eine CΞC-Dreifachbindung aufweisen, mindestens 7,5 Gew.-% bezogen auf die Gesamtzusammensetzung beträgt.

2. Zusammensetzung nach Anspruch 1, **dadurch gekennzeichnet, dass** das mindestens eine flüssige Polyisopren ein oder mehrere flüssige cis-1,4-Polyisopren(e) mit einem Molekulargewicht zwischen 10000 und 70000 umfasst oder dass das mindestens eine flüssige Polyisopren ein oder mehrere flüssige cis-1,4-Polyisopren(e) mit einem Molekulargewicht zwischen 15000 und 50000 umfasst.

3. Zusammensetzung nach Anspruch 1 oder 2, **dadurch gekennzeichnet, dass** das mindestens eine funktionalisierte, flüssige Polybutadien 1,4- und/oder 1,2-Polybutadien umfasst, wobei diese Polymere endständige und/oder statistisch verteilte seitenständige funktionelle Gruppen haben, wobei die funktionellen Gruppen vorzugsweise ausgewählt werden aus Hydroxy-, Amino-, Carboxyl-, Carbonsäureanhydrid- und Epoxygruppen, insbesondere Carboxygruppen, und wobei das Molekulargewicht dieser Flüssigkautschuke vorzugsweise unterhalb von 20000, vorzugsweise zwischen 900 und 10000 liegt.

4. Zusammensetzung nach einem der Ansprüche 1 bis 3, **dadurch gekennzeichnet, dass** die Trigylceridfraktion in Form eines pflanzlichen Öls eingesetzt wird, das die Trigylceridfraktion enthält oder daraus besteht, vorzugsweise ausgewählt aus Sonnenblumenöl, Rapsöl, Sojaöl, Tallöl, Rizinusöl, Leindotteröl, Tungöl, Leinöl, Hanföl und Mischungen davon, insbesondere Tallöl, Leinöl und/oder Rizinusöl, besonders bevorzugt Leinöl.

5. Zusammensetzung nach einem der Ansprüche 1 bis 4, **dadurch gekennzeichnet, dass** das mindestens eine Vulkanisationsmittel ausgewählt wird aus Schwefel, peroxidischen Vulkanisationssystemen, Chinonen und/oder Chinondioximen und/oder Dinitrosobenzolen.

6. Zusammensetzung nach einem der Ansprüche 1 bis 5, **dadurch gekennzeichnet, dass** die Triglyceridfraktion eine Fettsäurenverteilung mit einen Anteil von mindestens 60 Gew.-% einer oder mehrerer Omega-3-Fettsäure(n) und/oder einer oder mehrerer Omega-6-Fettsäure(n) aufweist und/oder die Triglyceridfraktion in einer Menge von 1 bis 25 Gew.-% bezogen auf die Gesamtzusammensetzung enthalten ist.

7. Zusammensetzung nach einem der Ansprüche 1 bis 6, **dadurch gekennzeichnet, dass** sie zusätzlich Füllstoffe, inklusive Rheologiehilfsmitteln, Pigmente, Klebrigmacher und/oder Haftvermittler, Treibmittel, Extenderöle, Alterungsschutzmittel und/oder Kombinationen davon enthält.

8. Zusammensetzung nach einem der Ansprüche 1 bis 7, **dadurch gekennzeichnet, dass**
(a) sie frei ist von Festkautschuken; und/oder
(b) sie plastisolartiges Fließverhalten aufweist.

9. Verwendung der Zusammensetzung nach einem der Ansprüche 1 bis 8 als einkomponentige- oder zweikomponentiger Klebstoff, Dichtstoff, Versiegelungsmasse oder Beschichtungsmasse, insbesondere im Automobillack

10. Verfahren, insbesondere im Fahrzeugrohbau, zum Verbinden von Bauteilen und/oder Abdichten von Fugen zwischen Bauteilen, insbesondere zur Versiegelung von Grob- und/oder Feinnähten oder zur Unterfütterung oder Verklebung von Bauteilen, **dadurch gekennzeichnet, dass** das Verfahren beinhaltet:
a) Applizieren der Zusammensetzung nach einem der Ansprüche 1 bis 8 auf mindestens ein Bauteil, insbesondere durch Sprühen oder Extrudieren;
b) Zusammenfügen der Bauteile, gegebenenfalls gefolgt vom (Punkt-)schweißen, Bördeln, Schrauben und/oder Nieten; und
c) Erhitzen der Bauteile zum Aushärten der Zusammensetzung, gegebenenfalls unter mechanischer Fixierung der Bauteile.

11. Verfahren zum Beschichten von Bauteilen, wobei das Verfahren beinhaltet:
a) Aufsprühen einer erfindungsgemäßen Zusammensetzung nach einem der Ansprüche 1 bis 8 auf die Oberfläche des Bauteils; und
b) Erhitzen des beschichteten Bauteils zum Aushärten der Zusammensetzung.

## Claims

1. A heat-curable reactive composition based on natural and/or synthetic elastomers containing olefinic double bonds, and vulcanizing agents, **characterized in that** the composition contains
(a) at least one liquid polyisoprene in an amount of from 1 to 25 wt.% based on the total composition;
(b) at least one functionalized liquid polybutadiene in an amount of from 0.1 to 10 wt.% based on the total composition;
(c) a triglyceride fraction of which the fatty acid distribution has a proportion of at least 5 wt.% of one or more omega-3 fatty acids and/or one or more omega-6 fatty acids, which fraction is present in an amount of from 1 to 40 wt.% based on the total composition; and
(d) at least one vulcanizing agent,
wherein the proportion of synthetic polymers that have at least one C=C double bond and/or at least one CΞC triple bond is at least 7.5 wt.% based on the total composition.

2. The composition according to claim 1, **characterized in that** the at least one liquid polyisoprene comprises one or more liquid cis-1,4 polyisoprenes having a molecular weight between 10,000 and 70,000 or **in that** the at least one liquid polyisoprene comprises one or more liquid cis-1,4 polyisoprenes having a molecular weight between 15,000 and 50,000.

3. The composition according to claim 1 or 2, **characterized in that** the at least one functionalized liquid polybutadiene comprises 1,4- and/or 1,2-polybutadiene, said polymers having terminal and/or statistically distributed side-chain functional groups, the functional groups preferably being selected from hydroxy, amino, carboxyl, carboxylic acid anhydride and epoxy groups, in particular carboxyl groups, and the molecular weight of said liquid rubbers preferably being less than 20,000, preferably between 900 and 10,000.

4. The composition according to one of claims 1 to 3, **characterized in that** the triglyceride fraction is used in the form of a vegetable oil that contains the triglyceride fraction or consists thereof, preferably selected from sunflower oil, rapeseed oil, soybean oil, tall oil, castor oil, cameline oil, tung oil, linseed oil, hemp oil and mixtures thereof, in particular tall oil, linseed oil and/or castor oil, particularly preferably linseed oil.

5. The composition according to one of claims 1 to 4, **characterized in that** the at least one vulcanizing agent is selected from sulfur, peroxidic vulcanizing systems, quinones and/or quinone dioximes and/or dinitrosobenzenes.

6. The composition according to one of claims 1 to 5, **characterized in that** the triglyceride fraction has a fatty acid distribution having a proportion of at least 60 wt.% of one or more omega-3 fatty acids and/or one or more omega-6 fatty acids, and/or the triglyceride fraction is contained in an amount of from 1 to 25 wt.% based on the total composition.

7. The composition according to one of claims 1 to 6, **characterized in that** it additionally contains fillers, including rheology auxiliaries, pigments, tackifiers and/or adhesion promoters, blowing agents, extender oils, anti-aging agents and/or combinations thereof.

8. The composition according to one of claims 1 to 7, **characterized in that**
(a) it is free of solid rubbers; and/or
(b) it exhibits plastisol-like flowing behavior.

9. The use of the component according to one of claims 1 to 8 as a one-component or two-component adhesive, sealant, sealing compound or coating compound, in particular in automotive paint.

10. A method, in particular when a vehicle is in the body-in-white stage, for connecting two components and/or sealing joints between components, in particular for sealing large and/or fine seams or underpinning or bonding components, **characterized in that** the method includes:
a) applying the composition according to one of claims 1 to 8 to at least one component, in particular by spraying or extruding;
b) joining the components together, optionally followed by (spot-) welding, flanging, screwing and/or riveting; and
c) heating the components in order to cure the composition, optionally with the components being mechanically fastened.

11. A method for coating components, wherein the method includes:
a) spraying a composition in accordance with the invention according to one of claims 1 to 8 onto the surface of the component; and
b) heating the coated component in order to cure the composition.

## Revendications

1. Composition réactive thermodurcissable à base de doubles liaisons oléfiniques naturelles et/ou synthétiques contenant des élastomères et des agents de vulcanisation, **caractérisée en ce que** la composition contient
(a) au moins un polyisoprène liquide en une quantité de 1 à 25 % en poids par rapport à la composition totale ;
(b) au moins un polybutadiène liquide fonctionnalisé en une quantité de 0,1 à 10 % en poids par rapport à la composition totale ;
(c) une fraction de triglycéride dont la répartition des acides gras présente une proportion d'au moins 5 % en poids d'un ou de plusieurs acide(s) gras oméga-3 et/ou d'un ou de plusieurs acide(s) gras oméga-6 en une quantité de 1 à 40 % en poids par rapport à la composition totale ; et
(d) au moins un agent de vulcanisation,
dans lequel la proportion de polymères synthétiques présentant au moins une double liaison C=C et/ou au moins une triple liaison C=C est d'au moins 7,5 % en poids par rapport à la composition totale.

2. Composition selon la revendication 1, **caractérisée en ce que** l'au moins un polyisoprène liquide comprend un ou plusieurs cis-1,4-polyisoprène(s) liquide(s) ayant un poids moléculaire compris entre 10 000 et 70 000 ou que l'au moins un polyisoprène liquide comprend un ou plusieurs cis-1,4-polyisoprène(s) liquide(s) ayant un poids moléculaire compris entre 15 000 et 50 000.

3. Composition selon la revendication 1 ou 2, **caractérisée en ce que** l'au moins un polybutadiène liquide fonctionnalisé comprend du 1,4- et/ou du 1,2-polybutadiène, dans laquelle lesdits polymères ont des groupes fonctionnels latéraux terminaux et/ou distribués aléatoirement, dans laquelle lesdits groupes fonctionnels sont de préférence choisis parmi les groupes hydroxy, amino, carboxyle, anhydride carboxylique et époxy, en particulier les groupes carboxy, et dans laquelle le poids moléculaire de ces caoutchoucs liquides est de préférence inférieur à 20 000, de préférence compris entre 900 et 10 000.

4. Composition selon l'une quelconque des revendications 1 à 3, **caractérisée en ce que** la fraction triglycéridique est utilisée sous forme d'une huile végétale contenant ou consistant en la fraction triglycéride, de préférence choisie parmi l'huile de tournesol, de colza, de soja, le tallöl, l'huile de ricin, de cameline, d'abrasin, de lin, de chanvre et des mélanges de ceux-ci, en particulier le tallöl, l'huile de lin et/ou l'huile de ricin, de manière particulièrement préférée l'huile de lin.

5. Composition selon l'une des revendications 1 à 4, **caractérisée en ce que** l'au moins un agent de vulcanisation est choisi parmi le soufre, les systèmes de vulcanisation peroxydiques, les quinones et/ou les dioximes de quinone et/ou les dinitrosobenzènes.

6. Composition selon l'une des revendications 1 à 5, **caractérisée en ce que** la fraction triglycéridique présente une répartition d'acides gras ayant une proportion d'au moins 60 % en poids d'un ou de plusieurs acides gras oméga-3 et/ou d'un ou de plusieurs acides gras oméga-6 et/ou la fraction de triglycéride est contenue en une quantité de 1 à 25 % en poids par rapport à la composition totale.

7. Composition selon l'une des revendications 1 à 6, **caractérisée en ce qu'**elle contient en outre des charges, notamment des adjuvants de rhéologie, des pigments, des agents d'adhésivité et/ou des adhésifs, des agents gonflants, des huiles d'extension, des agents anti-vieillissement et/ou des combinaisons de ceux-ci.

8. Composition selon l'une quelconque des revendications 1 à 7, **caractérisée en ce qu'**
(a) elle est exempte de caoutchoucs solides ; et/ou
(b) elle présente un comportement d'écoulement de type plastisol.

9. Utilisation de la composition selon l'une quelconque des revendications 1 à 8 en tant qu'adhésif, scellant, masse de scellement ou masse d'enduction monocomposant(e) ou bicomposant(e), en particulier dans la peinture automobile.

10. Procédé, en particulier dans la carrosserie du véhicule, pour l'assemblage de composants et/ou le scellage de joints entre composants, en particulier pour le scellage de joints grossiers et/ou fins ou pour le revêtement inférieur ou le collage de composants, **caractérisé en ce que** le procédé comprend :
(a) l'application de la composition selon l'une des revendications 1 à 8 à au moins un composant, notamment par pulvérisation ou extrusion ;
(b) l'assemblage des composants, éventuellement suivi d'un soudage (ponctuel), d'un bridage, d'un vissage et/ou d'un rivetage ; et
(c) le chauffage des composants pour durcir la composition, éventuellement avec une fixation mécanique des composants.

11. Procédé de revêtement de composants, le procédé comprenant :
(a) la pulvérisation d'une composition de l'invention selon l'une quelconque des revendications 1 à 8 sur la surface du composant ; et
(b) le chauffage du composant revêtu pour durcir la composition.
